**Europäisches Patentamt**

**European Patent Office**

**Office européen des brevets**

(19)

(11) Veröffentlichungsnummer **0 029 008**
**B1**

(12) # EUROPÄISCHE PATENTSCHRIFT

(45) Veröffentlichungstag der Patentschrift:
**19.09.84**

(21) Anmeldenummer: **80810338.6**

(22) Anmeldetag: **03.11.80**

(51) Int. Cl.³ **C 09 J 3/16**, C 08 L 63/00,
C 09 J 5/06

(54) **Flüssiger oder pastöser, vorgelierbarer und wärmehärtbarer Klebstoff auf Epoxidharzbasis und seine Verwendung.**

(30) Priorität: **09.11.79 CH 10047/79**

(43) Veröffentlichungstag der Anmeldung:
**20.05.81 Patentblatt 81/20**

(45) Bekanntmachung des Hinweises auf die Patenterteilung:
**19.09.84 Patentblatt 84/38**

(84) Benannte Vertragsstaaten:
**AT CH DE FR GB IT LI SE**

(56) Entgegenhaltungen:
**DE - A - 1 935 115**
**DE - A - 2 800 306**
**DE - C - 933 355**
**GB - A - 1 266 688**
**US - A - 2 713 567**
**US - A - 3 371 008**
**US - A - 3 519 576**

(73) Patentinhaber: **CIBA-GEIGY AG, Postfach,
CH-4002 Basel (CH)**

(72) Erfinder. **Lehmann, Hans, Steinackerstrasse 11,
CH-4147 Aesch (CH)**

**0 029 008**

## Beschreibung

Es ist bekannt, z. B. aus der DE-A-2 002 880, zum Verkleben von Formteilen einen bei Raumtemperatur flüssigen Klebstoff auf Epoxidharzbasis, der einen Zusatz von PVC-Plastisol enthält, zu verwenden. Beim kurzen Erwärmen über den Schmelzpunkt des PVC geliert die auf den zu verklebenden Teilen aufgebrachte Klebstoffschicht; man erhält beim Abkühlen einen nichtklebrigen Film, der bei längerem Erwärmen auf 160—180°C zunächst schmilzt und dann härtet. Derartige vorgelierbare Klebstoffe haben den Vorteil, daß ein damit beschichtetes Formteil, welches nicht sofort nach dem Auftragen verklebt werden kann, lediglich kurz erwärmt zu werden braucht, damit es beim Handhaben Werkzeuge, Arbeitsplätze, Kleider und Haut nicht beschmutzt. Ferner besteht keine Gefahr, daß der Klebstoff bei auf diese Weise behandelten Blechen beim Durchlaufen eines Reinigungs- oder Phosphatierungsbades ausgewaschen wird. Bevor der Klebstoff zwischen den zu verklebenden Teilen aushärtet, was gewöhnlich während des Einbrennens des Grundierlackes verfolgt, können die zusammengefügten Teile noch justiert werden. Einen Nachteil bedeutet die Abspaltung von korrosiven Gasen aus dem PVC. Sie ist bei den hohen Temperaturen, welche beim Einbrennen und besonders beim Punktschweißen angewendet werden müssen, nicht zu vermeiden. Solche Arbeitsgänge werden z. B. beim Kleben oder Dichten von Falznähten in der Autoindustrie durchgeführt.

Läßt man das PVC-Plastisol im Epoxidharz weg, so besteht die Gefahr, daß der Klebstoff durch Phosphatierungsbäder ausgewaschen wird und bei der Weiterverarbeitung der beschichteten Teil verschmutzend wirkt.

Weiterhin ist bekannt, z. B. aus der DE-A-1 935 115, DE-A-1 720 438 und DE-A-2 800 306, einem Epoxidharz/Härter-Gemisch einen Thermoplast, z. B. Polyolefin, Phenoxypolysulfonharz oder ein Copolymerisat aus Äthylen, Acrylsäure und Acrylsäureester, zuzusetzen und aus dem Gemisch Filme herzustellen, welche zur Verklebung von Formteilen zwischen die zu verklebenden Flächen gelegt und durch Hitzeeinwirkung gehärtet werden. Dabei müssen jedoch die Oberflächen der zu verklebenden Teile flach oder gleichmäßig gekrümmt bzw. passend sein, damit sich die Klebwirkung voll entfalten kann. Die Applikation des Klebstoffes mittels Spritzpistole ist nicht möglich.

Um aus solchen festen Mischungen flüssige zu erhalten, können Lösungsmittel zugesetzt werden, wie z. B. in der DE-A-2 052 225 beschrieben wird. Nachteilig ist dabei, daß vor dem Verkleben zunächst das Lösungsmittel entfernt werden muß, was aufwendig und in vielen Betrieben mit Gefahr verbunden ist. Zudem wird das Volumen des Klebstoffes kleiner und die fugenfüllenden Eigenschaften sind stark vermindert.

Es wurde nun ein flüssiger oder pastenförmiger sogenannter Einkomponentenklebstoff gefunden, der die genannten Nachteile nicht aufweist. Er kann auf unregelmäßige Oberflächen appliziert werden, z. B. mit Hilfe einer Spritzpistole, und bleibt nach kurzem Erhitzen während längerer Zeit auf den Flächen klebfähig, wobei er gleichzeitig grifftrocken wird und die mit dem Klebstoff versehenen Teile gehandhabt werden können, ohne daß Verschmutzungen auftreten oder der Klebstoff weggewaschen wird. Im weiteren bilden sich bei der nachträglichen Behandlung der verklebten Teile bei hohen Temperaturen keine korrosiven Gase.

Die Erfindung betrifft einen flüssigen oder pastösen, vorgelierbaren und wärmehärtbaren Klebstoff auf Epoxidharzbasis, dadurch gekennzeichnet, daß er

(a) ein flüssiges Epoxidharz mit durchschnittlich mehr als einer Epoxidgruppe im Molekül oder eine flüssige Mischung von Epoxidharzen mit durchschnittlich mehr als einer Epoxidgruppe im Molekül,

(b) Dicyandiamid als einen bei Raumtemperatur im Epoxidharz nicht löslichen latenten Härter für Epoxidharze,

(c) 5 bis 50 Gewichtsprozent, bezogen auf das Epoxidharz, mindestens einen halogenfreien, bei Raumtemperatur im Epoxidharz unlöslichen Thermoplast in Pulverform mit einem Erweichungspunkt zwischen 60 und 160°C und gegebenenfalls

(d) Beschleuniger, Netzmittel, Verlaufsmittel, Thixotropiermittel, Pigmente und andere übliche Hilfs- und Füllmittel enthält.

Als Epoxidharze können beliebige flüssige Harze mit mehr als einer 1,2-Epoxidgruppe im Molekül, ferner auch flüssige Mischungen aus festen und flüssigen Epoxidharzen verwendet werden. Vorzugsweise kommen Epoxidharze mit Äquivalentgewichten von 150—300 in Frage. Beispielsweise seien Polyglycidylverbindungen erwähnt, wie Diglycidyläther auf Basis von Bisphenol A oder F oder von Resorcin, Polyglycidyläther von Phenol- oder Kresolnovolaken, Diglycidyläther von hydriertem Bisphenol A, ferner Diglycidylester von Phthalsäure, Hexahydrophthalsäure und Tetrahydrophthalsäure.

Die Menge des zugesetzten Härters soll ausreichend sein, um das Epoxidharz in ein unlösliches, unschmelzbares, vernetztes Produkt umzuwandeln. Sie ist durch Versuche leicht zu bestimmen. Beispielsweise können auf 100 Gewichtsteile Epoxidharz 5 bis 20 Gewichtsteile Dicyandiamid eingesetzt werden.

Als Beschleuniger können Imidazol, Monuron, Chlortoluron und ähnliche Stoffe, als Verlaufsmittel z. B. Silane, Butandiolacrylsäureester, als Thixotropiermittel Siliciumdioxide (wie »Aerosil« reg. WZ),

2

**0 029 008**

Asbesttypen (wie »Silodex« reg. WZ) oder Bentonite (»Bentone« reg. WZ) verwendet werden. Diese Stoffe können z. B. in Mengen von 1—20 Gewichtsteilen auf 100 Gewichtsteile Epoxidharz eingesetzt werden. Der Klebstoff kann ferner in Mengen von 1—100 Gewichtsteilen, bezogen auf das Epoxidharz, Füllmittel, z. B. Metallpulver, wie Aluminiumpulver, Silikate wie Talk, Carbonate, wie Kreide und Pigmente enthalten.

Zur Verbesserung der Haftung des Klebstoffes auf öligen Blechen kann die Paste einen fettlöslichen Zusatz, wie Limonen, Dipenten oder Terpentinöl, in einer Menge von 1—10 Gewichtsprozent, bezogen auf den Klebstoff, enthalten.

Bevorzugte thermoplastische Materialien, welche der Klebstoff in Pulverform enthält, sind solche mit tiefem Erweichungspunkt, insbesondere Polyäthylen, Polypropylen und Äthylen/Acrylsäure/Acrylsäureester-Terpolymer; aber auch Polyamid, Äthylcellulose, Polyvinylformal und Polyvinylbutyral sind bevorzugte Materialien. Ein Zusatz von 5—20 Gewichtsprozent, bezogen auf das Epoxidharz, genügt im allgemeinen, um das Produkt vorgelierbar zu machen. Die Pulverkörner weisen vorzugsweise einen Durchmesser von 5 bis 200 µm auf. In Epoxidharzen bei Raumtemperatur lösliche Thermoplaste, wie ABS-Harze, sind schlecht verwendbar.

Vorgelierbar bedeutet die Fähigkeit des auf die zu verklebenden Flächen aufgebrachten Klebstoffes, nach kurzem Erhitzen über den Schmelzpunkt des Thermoplasts und Abkühlen eine klebfreie und grifftrockene Schicht zu bilden. Vorteilhaft erhitzt man den Klebstoff mindestens 20°C über den Schmelzpunkt des Thermoplasts, z B während 10—30 Sekunden bei etwa 180°C oder einige Minuten, z. B. 3—5, bei 120—150°C. Diese Temperaturen und Zeiten hängen von der Art des verwendeten Harzes, Härters und Thermoplasts und der Menge des Klebstoffes ab. Die besten Bedingungen können durch Ausprobieren leicht gefunden werden. Die trockene vorgelierte Schicht wird beim Erwärmen wieder flüssig und härtet bei weiterem Erwärmen aus.

Die Erfindung betrifft auch ein Verfahren zum Verkleben von Formgebilden oder Dichten von Falznähten, welches dadurch gekennzeichnet ist, daß man auf die zu verklebenden Flächen bzw. zu dichtenden Falznähte einen erfindungsgemäßen Klebstoff aufbringt, diesen auf eine Temperatur, die höher als die Schmelztemperatur des Thermoplasts liegt, erwärmt und solange bei dieser Temperatur hält, bis er nach dem Abkühlen auf Raumtemperatur klebfrei und grifftrocken wird, daß man dann die beschichteten Teile abkühlt und den Klebstoff nach dem Zusammenfügen der Teile durch Erhitzen härtet.

Das Kleb- bzw. Dichtungsverfahren kann vorzugsweise zum Verkleben von öligen Blechen, z. B. in der Autoindustrie, angewendet werden.

Beispiele 1 bis 6
und Vergleichsbeispiel A

Die Klebstoffe in diesen Beispielen beruhen auf dem gleichen Grundmaterial und unterscheiden sich nur hinsichtlich des Thermoplasts bzw. der Menge des Thermoplasts. Das Grundmaterial ohne Zusatz eines Thermoplasts dient als Vergleichsklebstoff A.

Das Grundmaterial bzw. der Vergleichsklebstoff A wird wie folgt hergestellt:

80 Gew.-Tl. eines flüssigen Epoxidharzes, hergestellt aus Epichlorhydrin und Bisphenol A mit einem Epoxiäquivalent von 188 und 20 Gew.-Tl. eines Adduktes, hergestellt aus einem flüssigen Bisphenol A-Epoxidharz und einem sauren Polyester aus Neopentylglykol und Sebazinsäure mit einem Epoxiäquivalent von 455 werden bei Raumtemperatur mit 5 Gew.-Tl. d-Limonen, 6 Gew.-Tl. Dicyandiamid und 6 Gew.-Tl. p-Chlorphenyl-dimethylharnstoff, 10 Gew.-Tl. Talkpulver und 4 Gew.-Tl. »Ärosil«® (Oberfläche 308 m²/g) vermischt und zur Verfeinerung auf einem Walzenstuhl einmal abgerieben. Es entsteht eine geschmeidige leicht thixotrope Paste, welche bei 150°C inert 30 Min. aushärtet. Eine Vorgelierung durch kurzes Erwärmen auf 180°C ist nicht möglich.

Beispiele 1—6

Zu 100 Gew.-Tl. Vergleichsklebstoff A werden bei Raumtemperatur bestimmte Mengen eines Thermoplasts (vgl. Tabelle I) zugemischt und die entstandene Paste in einer Schichtdicke von 0,5 mm auf ein leicht öliges Stahlblech aufgetragen. Das beschichtete Blech wird nun auf eine Heizplatte von 185°C gelegt und nach Erreichen von 180°C (mittels Schmelzsalz kontrolliert) während 20 Sekunden liegen gelassen, dann auf Raumtemperatur gekühlt. Es entsteht im Gegensatz zum Vergleichsbeispiel eine grifftrockene Oberfläche, welche sich beim nochmaligen Erwärmen auf 100°C wieder verflüssigt. Zwei so beschichtete Bleche werden nach dem Zusammenfügen bei 150°C während 30 Minuten ausgehärtet.

Die Zugscherfestigkeiten sind in der Tabelle I zusammengestellt. Sie wurden gemäß DIN 53 283 bestimmt.

| Beispiel | Thermoplastpulver | Zusatzmenge auf 100 Gew.-Tl. Harz | Oberfläche eines 0,5-mm-Films nach 20 Sekunden 180° C | Zugscherfestigkeit in N/mm² bei 25° C | bei 80°C |
|---|---|---|---|---|---|
| Vergleich A | — | — | klebrig | 20—22 | 20—22 |
| 1 | Polyäthylen | 5 Gew.-Tl. | trocken | 23—25 | 20—22 |
| 2 | Polyäthylen | 20 Gew.-Tl. | trocken | 18—20 | 14—16 |
| 3 | Äthylcellulose | 10 Gew.-Tl. | trocken | 22—24 | 17—18 |
| 4 | Äthylen/Acrylsäure/ Acrylsäureester- Terpolymer (»Lupolen«) | 10 Gew.-Tl. | trocken | 23—25 | 18—20 |
| 5 | Polyvinylformal 12/85 | 10 Gew.-Tl. | trocken | 24—26 | 16—18 |
| 6 | Polyamid 5000 | 10 Gew.-Tl. | trocken | 23—25 | 19—21 |

## Beispiel 7

80 Gew.-Tl. eines flüssigen Epoxidharzes auf Basis von Epichlorhydrin und Bisphenol A mit einem Epoxyäquivalent von 188 und 10 Gew.-Tl. eines Adduktes hergestellt aus einem flüssigen Bisphenol A-Epoxidharz und einem sauren Polyester aus Neopentylglykol und Sebazinsäure mit einem Epoxyäquivalent von 455 und 10 Gew.-Tl. Butandioldiglycidyläther mit einem Epoxyäquivalent von 108 werden bei Raumtemperatur mit 2 Gew.-Tl. d-Limonen, 6 Gew.-Tl. Dicyandiamid und 4 Gew.-Tl. p-Chlorphenyldimethyl-harnstoff, 60 Gew.-Tl. Kreidemehl, 5 Gew.-Tl. »Ärosil«® und 8 Gew.-Tl. Polyvinylbutyralpulver (»Mowital B 20 H« der Fa. Hoechst) vermischt und zur Verfeinerung auf dem Walzenstuhl abgerieben; es entsteht eine geschmeidige Paste, welche bei 150°C innert 30 Min. aushärtet.

Die Bestimmung der grifftrockenen Oberfläche von 0,5 mm Filmen wird bei verschiedenen Temperaturen durchgeführt. Die Werte werden mit den aus einer Vergleichsmischung B, welche kein Polyvinylbutyral enthält, verglichen: vgl. die folgende Tabelle. Ferner werden die Zugscherfestigkeiten wie in den Beispielen 1—6 beschrieben bestimmt.

| Vorgelier- temperatur °C | Einwirkungszeit zur Erreichung einer bei 25° C grifftrockenen Oberfläche Beispiel B | Beispiel 7 | Zugscherfestigkeit in N/mm² bei 25° C Beispiel 7 | bei 80°C Beispiel 7 |
|---|---|---|---|---|
| 140 | 7—8 Min. | 3—4 Min. | 20—22 | 18—20 |
| 120 | 18—20 Min. | 8—9 Min. | | |

## Patentansprüche

1. Flüssiger oder pastöser, vorgelierbarer und wärmehärtbarer Klebstoff auf Epoxidharzbasis, dadurch gekennzeichnet, daß er

(a) ein flüssiges Epoxidharz mit durchschnittlich mehr als einer Epoxidgruppe im Molekül oder eine flüssige Mischung von Epoxidharzen mit durchschnittlich mehr als einer Epoxidgruppe im Molekül,

(b) Dicyandiamid als einen bei Raumtemperatur im Epoxidharz nicht löslichen latenten Härter für Epoxidharze,

(c) 5 bis 50 Gewichtsprozent, bezogen auf das Epoxidharz, mindestens einen halogenfreien, bei Raumtemperatur im Epoxidharz unlöslichen Thermoplast in Pulverform mit einem Erweichungspunkt zwischen 60 und 160° C und gegebenenfalls

(d) Beschleuniger, Netzmittel, Verlaufsmittel, Thixotropiermittel, Pigmente und andere übliche Hilfs- und Füllmittel enthält.

2. Klebstoff gemäß Patentanspruch 1, dadurch gekennzeichnet, daß er als Thermoplast Polyäthylen, Polypropylen oder Äthylen/Acrylsäure/Acrylsäureesterterpolymer enthält.

3. Klebstoff gemäß Patentanspruch 1, dadurch gekennzeichnet, daß er als Thermoplast Polyamid, Äthylcellulose, Polyvinylformal oder Polyvinylbutyral enthält.

4. Klebstoff gemäß einem der Patentansprüche 1 bis 3, dadurch gekennzeichnet, daß er in einer Menge von 5 bis 20 Gewichtsprozent, bezogen auf das Epoxidharz, mindestens einen Thermoplast enthält.

5. Klebstoff gemäß Patentanspruch 1, dadurch gekennzeichnet, daß er in einer Menge von 1—10 Gewichtsprozent, bezogen auf den Klebstoff, einen fettlösenden Zusatz, wie Limonen, Dipenten oder Terpentinöl, enthält.

6. Klebstoff gemäß Patentanspruch 1, dadurch gekennzeichnet, daß er eine flüssige Epoxidharzmischung, 1—10 Gewichtsprozent, bezogen auf den Klebstoff, Limonen, 5—20 Gewichtsprozent, bezogen auf das Epoxidharz, Polyvinylbutyralpulver, 5—20 Gewichtsprozent, bezogen auf das Epoxidharz, Dicyandiamid, 1—20 Gewichtsprozent, bezogen auf das Epoxidharz, eines Thixotropiermittels, 1—20 Gewichtsprozent, bezogen auf das Epoxidharz, eines Beschleunigers und 1—100 Gewichtsprozent, bezogen auf das Epoxidharz, eines Füllstoffes enthält.

7. Verfahren zum Verkleben von Formgebilden oder Dichten von Falznähten, dadurch gekennzeichnet, daß man auf die zu verklebenden Flächen bzw. zu dichtenden Falznähte einen Klebstoff gemäß Patentanspruch 1 aufbringt, diesen auf eine Temperatur, die höher als die Schmelztemperatur des Thermoplasts liegt, erwärmt und solange bei dieser Temperatur vorgeliert, bis er nach dem Abkühlen auf Raumtemperatur klebfrei und grifftrocken wird, daß man dann die beschichteten Teile abkühlt und den Klebstoff nach dem Zusammenfügen der Teile durch Erhitzen härtet.

8. Verfahren gemäß Patentanspruch 7, dadurch gekennzeichnet, daß dem Klebstoff Polyäthylenpulver mit einem Schmelzbereich von 116 bis 119°C als Thermoplast zugesetzt ist, und daß man die Vorgelierung während 10—30 Sekunden bei etwa 180°C durchführt.

## Claims

1. Liquid or pasty thermosetting adhesive which can be pre-gelled and which is based on epoxide resin, characterised in that it contains

(a) a liquid epoxide resin having on average more than one epoxide group in the molecule, or a liquid mixture of epoxide resins having on average more than one epoxide group in the molecule,

(b) dicyandiamide as a latent curing agents for epoxide resins, which is insoluble in the epoxide resin at room temperature,

(c) 5 to 50 per cent by weight, relative to the epoxide resin, of at least one halogen-free thermoplast in powder form, which is insoluble in the epoxide resin at room temperature, and which has a softening point of between 60 and 160"C, and optionally

(d) accelerators, wetting agents, levelling agents, thixotropic agents, pigments and other customary auxiliaries and fillers.

2. Adhesive according to claim 1, characterised in that it contains as thermoplast: polyethylene, polypropylene or an ethylene/acrylic acid/acrylate terpolymer.

3. Adhesive according to claim 1, characterised in that it contains as thermoplast: polyamide, ethyl cellulose, polyvinyl formal or polyvinyl butyral.

4. Adhesive according to any one of claim 1 to 3, characterised in that it contains at least one thermoplast in an amount of 5 to 20 per cent by weight, relative to the epoxide resin.

5. Adhesive according to claim 1, characterised in that it contains a lipolytic additive, such as limonene, dipentene or turpentine oil, in an amount of 1—10 per cent by weight, relative to the adhesive.

6. Adhesive according to claim 1, characterised in that it contains a liquid epoxide resin mixture, 1—10 per cent by weight, relative to the adhesive, of limonene, 5—20 per cent by weight, relative to the epoxide resin, of polyvinyl butyral powder, 5—20 per cent by weight, relative to the epoxide resin, of dicyandiamide, 1—20 per cent by weight, relative to the epoxide resin, of a thixotropic agent, 1—20 per cent by weight, relative to the epoxide resin, of an accelerator, and 1—100 per cent by weight, relative to the epoxide resin, of a filler.

7. Process for the bonding of moulded parts or for the sealing of folded seams, characterised in that there is applied to the surfaces to be bonded or to the folded seams to be sealed an adhesive according to claim 1, this is heated to a temperature higher than the melting temperature of the thermoplast, and pre-gelled at this temperature until, on cooling to room temperature, it is non-tacky and dry to the touch; that the coated parts are then cooled and the adhesive, after the parts have been joined together, is subsequently cured by heating.

8. Process according to claim 7, characterised in that polyethylene powder having a melting range of 116—119° C is added as thermoplast to the adhesive, and the pre-gelling is performed for 10—30 seconds at about 180° C.


**Revendications**

1. Colle liquide ou pâteuse, prégélifiable et thermodurcissable, à base d'un résine époxydique, colle caractérisée en ce qu'elle contient:

(a)  une résine époxydique liquide renfermant en moyenne plus d'un radical époxy par molécule, ou un mélange liquide de résines époxydiques renfermant en moyenne plus d'un radical époxy par molécule,
(b)  de la cyanoguanidine comme durcisseur latent pour résines époxydiques, insoluble à la température ambiante dans la résine époxydique,
(c)  de 5 à 50% en poids, par rapport à la résine époxydique, d'au moins une matière thermoplastique pulvérulente non halogénée, insoluble à la température ambiante dans la résine époxydique et dont le point de ramollissement est compris entre 60 et 160° C, et éventuellement,
(d)  des accélérateurs, des mouillants, des agents de nivellement, des agents de thixotropie, des pigments et d'autres adjuvants et charges usuels.

2. Colle selon la revendication 1, caractérisée en ce qu'elle contient, comme matière thermoplastique, du polyéthylène, du polypropylène ou un polymère ternaire éthylène/acide acrylique/ester acrylique.

3. Colle selon la revendication 1, caractérisée en ce qu'elle contient, comme matière thermoplastique, un polyamide, de l'éthylcellulose, du polyvinylformal ou du polyvinylbutyral.

4. Colle selon l'une quelconque des revendications 1 à 3, caractérisée en ce qu'elle contient au moins une matière thermoplastique en une quantité de 5 à 20% poids par rapport à la résine époxydique.

5. Colle selon la revendication 1, caractérisée en ce qu'elle contient un additif dissolvant les corps gras, tel que le limonène, le dipentène ou l'essence de térébenthine, en une quantité de 1 à 10% en poids par rapport à la colle.

6. Colle selon la revendication 1, caractérisée en ce qu'elle contient un mélange liquide de résines époxydiques, de 1 à 10% en poids, par rapport à la colle, de limonène, de 5 à 20% en poids, par rapport à la résine époxydique, d'une poudre de polyvinylbutyral, de 5 à 20% en poids, par rapport à la résine époxydique, de cyanoguanidine, de 1 à 20% en poids, par rapport à la résine époxydique, d'un agent de thixotropie, de 1 à 20% en poids, par rapport à la résine époxydique, d'un accélérateur, et de 1 à 100% en poids, par rapport à la résine époxydique, d'une charge.

7. Procédé pour coller des objets moulés ou pour étanchéifier des joints d'agrafage, procédé caractérisé en ce qu'on applique une colle conforme à l'invention sur les surfaces à coller ou sur les joints d'agrafage à étanchéifier, on chauffe cette colle à une température supérieure à la température de fusion de la matière thermoplastique et on la prégélifie à cette température jusqu'à ce qu'elle soit devenue, après refroidissement à la température ambiante, hors poisse et hors toucher, puis on refroidit les pièces enduites et, après les avoir assemblées, on durcit la colle par chauffage.

8. Procédé selon la revendication 7, caractérisé en ce qu'on ajoute à la colle, comme matière thermoplastique, une poudre de polyéthylène ayant un domaine de fusion de 116 à 119°C et on effectue la prégélification à environ 180° C pendant 10 à 30 secondes.